# DEMANDE DE BREVET EUROPEEN

(11) **EP 4 394 631 A1**
(43) Date de publication de la demande: **03.07.2024**
(21) Numéro de dépôt: 23220240.8
(22) Date de dépôt: 27.12.2023
(51) Int. Cl.: G06F 21/53, G06F 9/455, G06F 21/62

(54) **PROCÉDÉ DE CONTRÔLE D'UN CALCULATEUR EMBARQUÉ PROPRE À CONTRÔLER UN SYSTÈME CRITIQUE, CALCULATEUR ET VÉHICULE ASSOCIÉS**

(30) Priorité: 27.12.2022 FR 2214531
(71) Demandeur: THALES, 92190 Meudon (FR)
(72) Inventeur: PINTO, Carlos, 49309 Cholet (FR); CHAUVIERE, Nicolas, 49309 Cholet (FR); THIBAUD, Michaël, 49309 Cholet (FR)
(74) Mandataire: Lavoix

(57) **Abrégé**

La présente invention concerne un procédé de contrôle d'un calculateur embarqué (18) propre à contrôler un système critique (16), le calculateur embarqué (18) comprenant :
- un unique micronoyau (20) adapté à mettre en oeuvre un ensemble d'opérations,
- des composants matériels (22, 28, 30) auxquels le micronoyau (20) a accès pour mettre en oeuvre l'ensemble d'opérations, et
- une unité de contrôle (26), l'unité de contrôle (26) étant propre à contrôler les accès du micronoyau (20) aux composants matériels (22, 28, 30), l'unité de contrôle (26) étant isolée du micronoyau (20),
le procédé de contrôle comportant une étape de contrôle par l'unité de contrôle (26) des accès du micronoyau (20) aux composants matériels (22, 28, 30).

## Description

La présente invention concerne un calculateur embarqué et un véhicule comprenant un tel calculateur embarqué.

Dans le domaine des systèmes embarqués, la sécurité est une problématique cruciale.

En particulier, lors du développement des systèmes embarqués, des vulnérabilités peuvent être introduites. On peut citer la technique de dépassement de tampon (plus souvent désignée sous la dénomination anglaise correspondante de « buffer overflow »), ou la technique de dépassement d'entier (plus souvent désignée sous la dénomination anglaise correspondante de « Integer overflow »).

Ces vulnérabilités peuvent permettre à un attaquant en phase d'utilisation du système embarqué développé de récupérer des données confidentielles, de modifier temporairement ou définitivement le comportement du système embarqué, voire de rendre le système embarqué inopérant.

Il est connu de limiter la présence des vulnérabilités par l'emploi de plusieurs techniques parmi lesquelles celle du test unitaire, du test à données aléatoires (plus souvent désignée sous la dénomination anglaise correspondante de « fuzzer »), de l'analyse de code statique, de l'analyse de code dynamique ou de la preuve formelle.

En complément de ces outils de limitation, il est également possible d'utiliser des techniques permettant de détecter l'exploitation de vulnérabilités.

La détection de modification non prévue de la pile est un exemple d'une telle technique. Les « stack canary » et les « shadow stack » sont deux techniques détection des dépassements de tampon dans la pile.

Toutefois, aucune de ces techniques ne permet de détecter l'ensemble des vulnérabilités.

Il existe donc un besoin pour un procédé de contrôle d'un calculateur embarqué permettant de détecter un plus grand ensemble de vulnérabilités.

A cet effet, la description décrit un procédé de contrôle d'un calculateur embarqué propre à contrôler un système critique, le calculateur embarqué comprenant :
- un unique micronoyau adapté à mettre en oeuvre un ensemble d'opérations,
- des composants matériels auxquels le micronoyau a accès pour mettre en oeuvre l'ensemble d'opérations, et
- une unité de contrôle, l'unité de contrôle étant propre à contrôler les accès du micronoyau aux composants matériels, l'unité de contrôle étant isolée du micronoyau,
le procédé de contrôle comportant une étape de contrôle par l'unité de contrôle des accès du micronoyau aux composants matériels.

Selon des modes de réalisation particuliers, le procédé de contrôle présente une ou plusieurs des caractéristiques suivantes, prise(s) isolément ou selon toutes les combinaisons techniquement possibles :
- le calculateur embarqué comporte, en outre, une unité de gestion de mémoire, l'étape de contrôle comportant le contrôle de l'unité de gestion de mémoire.
- le procédé comporte, en outre, les étapes de :
   - analyse des sections d'un binaire obtenu par compilation du micronoyau, et
   - déduction des accès aux composants matériels par le micronoyau lors d'un fonctionnement normal du micronoyau, pour obtenir une configuration d'accès, l'étape de contrôle des accès prenant en compte la configuration d'accès.
- le procédé comporte la génération d'un binaire, les étapes d'analyse et de déduction étant mises en oeuvre à l'aide du binaire généré.
- lors de l'étape de déduction, la configuration d'accès correspond au nombre minimal d'accès aux composants matériels permettant le fonctionnement normal du micronoyau.
- le procédé de contrôle comporte également une étape de blocage de la modification du micronoyau.
- les composants matériels comportent une unité de calcul, le procédé étant mis en oeuvre au démarrage de l'unité de calcul.
- il est défini des niveaux de privilège d'accès aux composants matériels, le niveau de privilège de l'unité de contrôle étant strictement supérieur au niveau de privilège du micronoyau.

La description se décrit aussi un calculateur embarqué propre à contrôler un système critique, le calculateur embarqué comprenant :
- un unique micronoyau adapté à mettre en oeuvre un ensemble d'opérations,
- des composants matériels auxquels le micronoyau a accès pour mettre en oeuvre l'ensemble d'opérations, et
- une unité de contrôle, l'unité de contrôle étant propre à contrôler les accès du micronoyau aux composants matériels, l'unité de contrôle étant isolée du micronoyau.

La description se rapporte également à un véhicule comportant un calculateur embarqué tel que précédemment décrit.

Dans la présente description, l'expression « propre à » signifie indifféremment « adapté pour », « adapté à » ou « configuré pour ».

Des caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un exemple de véhicule comportant un calculateur embarqué présentant plusieurs unités, et
- la figure 2 est une représentation schématique du fonctionnement du calculateur illustrant les interactions entre les unités représentées sur la figure 1.

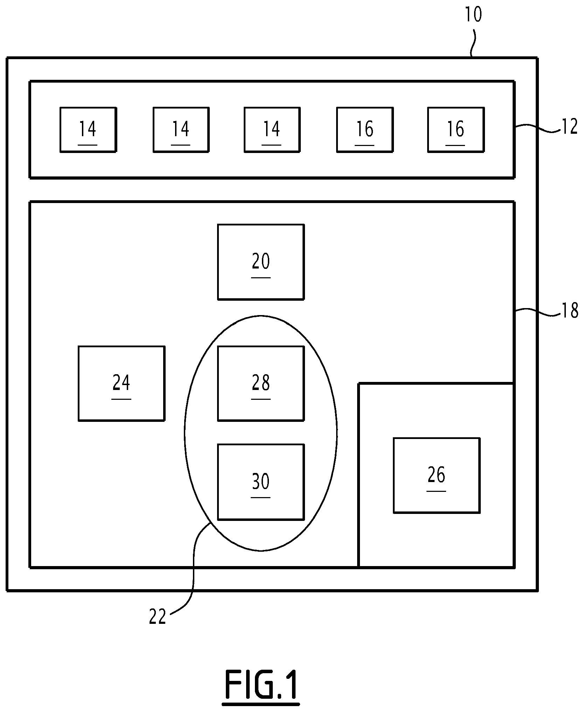

Un véhicule 10 est illustré schématiquement sur la figure 1.

Le véhicule 10 est tout type de véhicule et en particulier, peut être un véhicule terrestre, aérien ou marin.

Le véhicule 10 comporte un ensemble 12 de systèmes parmi lesquels des systèmes non-critiques 14 et des systèmes critiques 16.

Un système est considéré comme un système critique lorsqu'une défaillance de ce système met en péril le fonctionnement du véhicule 10.

Par exemple, le système de propulsion ou les systèmes de détection sont des systèmes critiques 16.

Le véhicule 10 comprend aussi un calculateur embarqué 18 adapté à contrôler les systèmes critiques 16.

Dans la suite, le calculateur embarqué 18 est simplement dénommé calculateur 18 pour simplifier la lecture.

Du fait d'un tel contrôle, le calculateur 18 est un système critique.

A ce titre, le calculateur 18 respecte un niveau de sécurité relativement élevé par rapport à un processeur standard ne répondant pas à des besoins de sécurité.

Comme représenté schématiquement sur la figure 1, le calculateur 18 comporte un unique micronoyau 20, des composants matériels 22, une unité de gestion de mémoire 24 et une unité de contrôle 26.

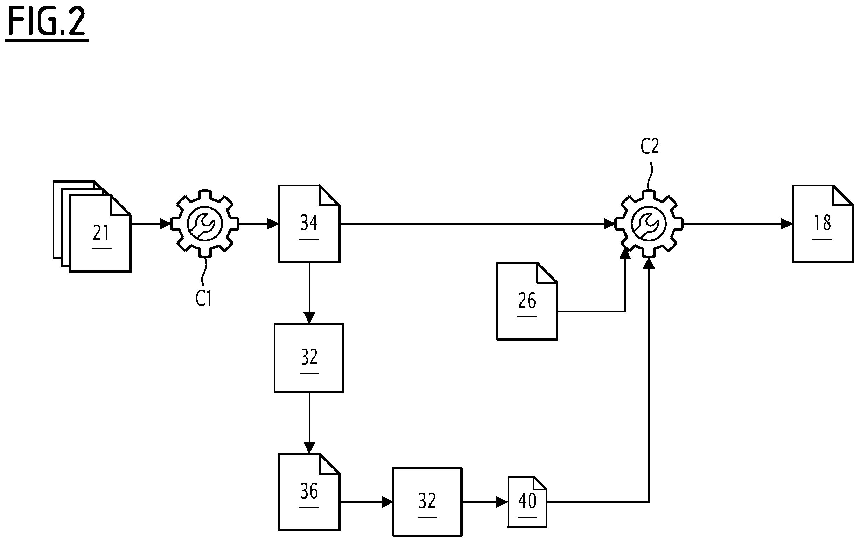

Le micronoyau 20 est unique mais sert à gérer plusieurs tâches. Cela est représenté très schématiquement sur la figure 2 par un ensemble de feuilles superposées avec le signe de référence 21.

A ce titre, le micronoyau 20 est adapté à mettre en oeuvre un ensemble d'opérations.

Ainsi, dans la suite, les tâches ou les opérations que le micronoyau 20 est propre à mettre en oeuvre sont associées au signe de référence 21.

Le micronoyau 20 est un élément conservant un petit nombre de fonctions fondamentales. L'ensemble des fonctionnalités habituellement proposées par les noyaux monolithiques est alors assuré par des éléments extérieurs au micronoyau 20.

Cela permet d'obtenir un noyau de petite taille présentant une meilleure sécurité, cette sécurité étant requise pour les applications embarquées.

Typiquement un micronoyau correspond à moins de 50 000 lignes de codes tandis qu'un noyau correspond à plusieurs millions de lignes de code.

Les composants matériels 22 sont des composants auquel le micronoyau 20 a accès pour mettre en oeuvre l'ensemble d'opérations 21.

A titre purement illustratif, dans le cas de la figure 1, il est supposé que les composants matériels 22 sont une mémoire 28 et une unité de calcul 30.

Les fonctionnalités de la mémoire 28 et de l'unité de calcul 30 sont ici des fonctionnalités standard pour le domaine de l'embarqué, à savoir respectivement mémoriser des données et effectuer des opérations 21.

Le micronoyau 20 peut accéder à la mémoire 28 selon trois modalités :
- lecture seule (modalité plus souvent désignée par la dénomination anglaise correspondante de « read only »), ou
- lecture et écriture (modalité plus souvent désignée par la dénomination anglaise correspondante de « read/write »), ou
- exécution (modalité plus souvent désignée par la dénomination anglaise correspondante de « execute » et qui utilise la présence d'un registre donnant la position de la prochaine instruction à exécuter).

L'unité de gestion de mémoire 24 sert à contrôler les accès mémoire.

L'unité de gestion de mémoire 24 est plus souvent désignée par l'abréviation MMU renvoyant à la dénomination anglaise correspondante de « *Memory Management Unit* »*.*

L'unité de contrôle 26 est propre à contrôler les accès du micronoyau 20 aux composants matériels 22.

Comme cela sera décrit ultérieurement, dans l'exemple décrit, l'unité de contrôle 26 contrôle les accès par contrôle de l'unité de gestion de mémoire 24.

L'unité de contrôle 26 est isolée du micronoyau 20 et des tâches 21 que le micronoyau 20 accomplit.

Par isolation, il est entendu ici le fait que l'unité de contrôle 26 fonctionne totalement indépendamment du micronoyau 20.

En outre, l'unité de contrôle 26 dispose d'un niveau de privilège d'accès aux composants matériels 22 qui est strictement supérieure au niveau de privilège du micronoyau 20.

De préférence, l'unité de contrôle 26 dispose du niveau de privilège le plus élevé.

Cela permet d'assurer un bon contrôle du micronoyau 20 par l'unité de contrôle 26.

A contrario, le niveau de privilège inférieur du micronoyau garantit que le micronoyau 20 ne peut pas modifier l'unité de contrôle 26.

L'unité de contrôle 26 correspond ici à un code de faible taille, typiquement moins de 1000 lignes.

Le fonctionnement du calculateur 18 est maintenant décrit en référence à la représentation schématique de la figure 2 correspondant à la mise en oeuvre d'un procédé de contrôle du calculateur 18.

Le procédé de contrôle comporte une première phase mise en oeuvre par une unité d'analyse 32, schématisé par un carré sur la figure 2.

Il est supposé ici que le micronoyau 20 est en cours de réalisation, c'est-à-dire que la première phase correspond à la phase de développement/mise au point du micronoyau 20 avant son déploiement sur le terrain.

Lorsque le micronoyau 20 est compilé (voir élément C1 sur la figure 2), un binaire 34 du programme est généré.

Un tel binaire est plus souvent désigné selon la dénomination anglaise correspondante de « binary ». Le binaire est un fichier organisé en section prédéfinie, les sections rassemblant, par exemple, les instructions ou les données en lecture seules (les constantes).

Le binaire 34 décrit, pour le micronoyau 20, les interactions entre le micronoyau 20 et l'extérieur du micronoyau 20.

L'unité d'analyse 32 exploite le binaire 34 pour analyser les différentes sections du binaire 34 pour générer les droits d'accès associés aux différentes zones mémoires en fonction des données qui y sont mémorisées (constantes, exécutable ou la pile)

Selon le mode de réalisation décrit, l'unité d'analyse 32 calcule le nombre minimal d'accès aux différentes zones mémoires permettant le fonctionnement normal du micronoyau 20 et des tâches 21 qu'il réalise.

Cela permet notamment de restreindre la quantité de mémoire utilisable au juste nécessaire. Une telle restriction permet de limiter les risques de fuite de données confidentielles en mémoire et les tests ou effacement associés.

Cette opération est schématisée par l'élément 36 sur la figure 2.

L'unité d'analyse 32 est ainsi un outil de génération de configuration de politique de sécurité automatique. A ce titre, il est capable d'analyser le binaire 34 pour identifier les propriétés de sécurité associées à chaque section standard du binaire 34.

A partir de cette identification, l'unité d'analyse 32 est capable de générer une configuration d'accès 36.

La configuration d'accès 36 est exploitable dans un format standard pour permettre éventuellement un complément de configuration manuel.

En particulier, un complément de configuration manuel peut consister à définir les propriétés de sécurité associées aux sections non standard.

Cette configuration d'accès 36 est ensuite convertie en un fichier de configuration 40 interprétable par un compilateur.

Le fichier de configuration 40 rassemble les accès autorisés à la mémoire 28.

Le procédé comporte, ensuite, une deuxième étape de compilation (élément C2 sur la figure 2) correspondant à la compilation de l'unité de contrôle, de l'interface binaire-programme et de la configuration d'accès.

La connaissance des accès autorisés aux composants matériels 22 par l'unité de contrôle 26 permet à celle-ci de contrôler l'unité de gestion de mémoire 24.

Plus précisément, l'unité de contrôle 26 va imposer à l'unité de gestion de mémoire 24 de fonctionner selon des règles correspondant aux accès autorisés de la configuration générée.

Pour augmenter la sécurité, le procédé de contrôle comporte également une étape de blocage de la modification du micronoyau 20.

Cela signifie que l'unité de contrôle 26 permet de rendre non modifiable les zones de code correspondant au micronoyau 20.

Il est ainsi obtenu un calculateur 18 pour lequel l'unité de contrôle 26 est ainsi capable de détecter toute demande d'accès anormale au niveau de l'unité de gestion de mémoire 24 lors de la deuxième phase correspondant à l'exploitation du calculateur 18.

Cela permet de détecter les techniques de dépassement de tampon ou de dépassement d'entier.

Le procédé de contrôle décrit permet ainsi l'obtention d'une meilleure sécurité pour le calculateur 18.

Ce contrôle présente la spécificité d'être réalisé lors de toutes les phases d'obtention du calculateur 18 et pas seulement en phase opérationnelle.

En effet, le contrôle est assuré dès qu'il est possible de compiler le micronoyau 20.

C'est donc déjà le cas lors de la phase de développement du micronoyau 20.

En outre, c'est la même unité de contrôle 26 qui est utilisée à la fois lors du développement et de l'utilisation, ce qui limite la possibilité à un attaquant d'exploiter une vulnérabilité d'un micronoyau 20.

La présence de l'unité de contrôle 26 permet d'obtenir un calculateur 18 compatible avec les contraintes de l'embarqué.

D'autres modes de réalisation du procédé peuvent être considérés tout en garantissant ce bon niveau de sécurité.

En particulier, le procédé peut comporter une étape de création d'un journal enregistrant tous les accès non autorisés.

Cela améliore le suivi du bon fonctionnement du calculateur 18.

Il est également indispensable que l'étape de contrôle soit mise en oeuvre au démarrage de l'unité de calcul 30 pour s'assurer que le contrôle est toujours effectif.

Lorsque les composants matériels 22 comportent d'autres composants que les composants de la figure 1, la configuration d'accès 36 comprend également des éléments pour empêcher que ces composants puissent effectuer des modifications ou contourner les contrôles effectués par l'unité de gestion de mémoire 24.

## Revendications

1. Procédé de contrôle d'un calculateur embarqué (18) propre à contrôler un système critique (16), le calculateur embarqué (18) comprenant :
- un unique micronoyau (20) adapté à mettre en oeuvre un ensemble d'opérations (21),
- des composants matériels (22, 28, 30) auxquels le micronoyau (20) a accès pour mettre en oeuvre l'ensemble d'opérations (21), et
- une unité de contrôle (26), l'unité de contrôle (26) étant propre à contrôler les accès du micronoyau (20) aux composants matériels (22, 28, 30), l'unité de contrôle (26) étant isolée du micronoyau (20),
le procédé de contrôle comportant une étape de contrôle par l'unité de contrôle (26) des accès du micronoyau (20) aux composants matériels (22, 28, 30).

2. Procédé de contrôle selon la revendication 1, dans lequel, le calculateur embarqué (18) comporte, en outre, une unité de gestion de mémoire (24), l'étape de contrôle comportant le contrôle de l'unité de gestion de mémoire (24).

3. Procédé de contrôle selon la revendication 1 ou 2, dans lequel, le procédé comporte, en outre, les étapes de :
- analyse des sections d'un binaire (34) obtenu par compilation du micronoyau (20), et
- déduction des accès aux composants matériels (22, 28, 30) par le micronoyau (20) lors d'un fonctionnement normal du micronoyau (20), pour obtenir une configuration d'accès,
l'étape de contrôle des accès prenant en compte la configuration d'accès.

4. Procédé de contrôle selon la revendication 3, dans lequel, le procédé comporte la génération d'un binaire (34), les étapes d'analyse et de déduction étant mises en oeuvre à l'aide du binaire généré.

5. Procédé de contrôle selon la revendication 3 ou 4, dans lequel, lors de l'étape de déduction, la configuration d'accès correspond au nombre minimal d'accès aux composants matériels (22, 28, 30) permettant le fonctionnement normal du micronoyau (20).

6. Procédé de contrôle selon l'une quelconque des revendications 1 à 5, dans lequel, le procédé de contrôle comporte également une étape de blocage de la modification du micronoyau (20).

7. Procédé de contrôle selon l'une quelconque des revendications 1 à 6, dans lequel, les composants matériels (22, 28, 30) comportent une unité de calcul (30), le procédé étant mis en oeuvre au démarrage de l'unité de calcul (30).

8. Procédé de contrôle selon l'une quelconque des revendications 1 à 7, dans lequel, il est défini des niveaux de privilège d'accès aux composants matériels (22, 28, 30), le niveau de privilège de l'unité de contrôle (26) étant strictement supérieur au niveau de privilège du micronoyau (20).

9. Calculateur embarqué (18) propre à contrôler un système critique (16), le calculateur embarqué (18) comprenant :
- un unique micronoyau (20) adapté à mettre en oeuvre un ensemble d'opérations (21),
- des composants matériels (22, 28, 30) auxquels le micronoyau (20) a accès pour mettre en oeuvre l'ensemble d'opérations (21), et
- une unité de contrôle (26), l'unité de contrôle (26) étant propre à contrôler les accès du micronoyau (20) aux composants matériels (22, 28, 30), l'unité de contrôle (26) étant isolée du micronoyau (20).

10. Véhicule (10) comportant un calculateur embarqué (18) selon la revendication 9.
